# EUROPÄISCHE PATENTANMELDUNG

(11) **EP 2 952 544 A1**
(43) Veröffentlichungstag der Anmeldung: **09.12.2015**
(21) Anmeldenummer: 14171602.7
(22) Anmeldetag: 06.06.2014
(51) Int. Cl.: C08L 83/04

(54) **Sprühbare Zusammensetzung, deren Verwendung und Verfahren zum Abdichten von Öffnungen oder Spalten in Bauteilen**

(71) Anmelder: HILTI Aktiengesellschaft, 9494 Schaan (LI)
(72) Erfinder: Simon, Sebastian, 86807 Buchloe Lindenberg (DE); Förg, Christian, 86862 Lamerdingen (DE); Falkenberg, Stephanie, 86156 Augsburg (DE); Huber, Johann, 86899 Landsberg (DE); Juli, Stephan, 6700 Bludenz (DE); Draber, Edgar, 51519 Odenthal (DE); Zöller, Daniel, 59737 Köln (DE)
(74) Vertreter: Hilti Aktiengesellschaft Corporate Intellectual Property

(57) **Zusammenfassung**

Es wird eine sprühbare, standfeste Zusammensetzung, enthaltend mindestens ein Hydroxylgruppen und/oder hydrolysierbare Gruppen enthaltendes Organopolysiloxan, mindestens ein Vernetzungsmittel auf Basis eines funktionalisierten Silans, mindestens einen Füllstoff auf Siliciumdioxid-Basis und mindestens einen Kondensationskatalysator, deren Verwendung als Beschichtung und ein Verfahren zum Abdichten von Öffnungen oder Spalten in Bauteilen beschrieben.

## Beschreibung

Die vorliegende Erfindung betrifft eine Zusammensetzung auf der Basis von feuchtigkeitsvernetzenden Organopolysiloxanen, deren Verwendung als Dichtstoff und ein Verfahren zum Abdichten von Öffnungen oder Spalten in Bauteilen.

Aus dem Stand der Technik ist es bekannt, Spalten (im Folgenden auch als "Fugen" bezeichnet) zwischen Bauteilen, etwa Wänden, beispielsweise während des Baus eines Gebäudes, mit einem Dichtstoff abzudichten. Als Fuge wird im Bauwesen ein gewollter oder toleranzbedingter Spalt oder Zwischenraum zwischen zwei Bauteilen oder Materialien bezeichnet. Eine häufige Anwendung ist die (brandsichere) Abdichtung von sogenannten Anschlussfugen oder von Bewegungsfugen wie sie insbesondere bei vorgehängten Fassaden entstehen. Anschlussfugen entstehen zwangsläufig, wenn zwei unterschiedliche Bauteile aus gleichen oder unterschiedlichen Materialien aufeinandertreffen. Dazu wird häufig zunächst ein Dämmstoff in den Zwischenraum eingebracht und anschließend ein Dichtstoff bevorzugt mittels eines Sprühverfahrens aufgetragen.

Die Dichtstoffe, insbesondere die wasserbasierten Dichtstoffe werden dabei typischerweise derart eingestellt, dass sie in einem Sprühverfahren aufgetragen werden können. Ferner hat sich dieses Verfahren durchgesetzt, da sehr wenig Material eingesetzt wird und zudem die wasserbasierenden Dichtstoffe im Vergleich zu Silicon oder solchen auf Basis von MS-Polymeren oder Hybriden preislich sehr attraktiv sind.

Die Abdichtung muss dabei nicht nur die gefüllte Fuge abdecken sondern auch einen gewissen Bereich auf den angrenzenden Bauteilen, um zum einen eine Abdichtung gegen Rauch und andere giftige Gase sicherstellen, aber auch eine zuverlässige Befestigung auf den Bauteilen ermöglichen, um sicherzustellen, dass sich bei Bewegungen der Bauteile relativ zueinander die Abdichtung nicht von den Bauteilen ablöst und sich Öffnungen bilden, durch die wieder Rauch und Gase treten können. Insbesondere die Anwendung der Abdichtung von Fugen bei vorgehängten Fassaden stellt hohe Anforderungen an die zu verwendende Abdichtung. Aufgrund der oft unterschiedlichen Materialien der aneinandergrenzenden Bauteile muss eine Haftung der Abdichtung auf unterschiedlichen Materialien sichergestellt werden. Um ein Abtropfen oder Ablaufen der Abdichtung von vertikalen Flächen oder Überkopfflächen zu verhindern, muss die Formulierung unmittelbar nach dem Aufsprühen standfest sein.

Eine weitere besondere Anforderung an die Abdichtungen, welche bei gefüllten Fugen Verwendung finden ist, dass die Formulierungen/Zusammensetzungen im Airlessverfahren appliziert werden können. Hierzu muss der Anwendungsdruck möglichst niedrig gehalten werden oder entsprechenden den Anwendungserfordernissen eingestellt werden können. Beim Airless-Spritzverfahren (ohne Druckluftzerstäubung) erfolgt die Zerstäubung des Material mit hydraulischem Druck bei 50 bis 250 bar. Das Material wird mittels einer Pumpe unter Druck gesetzt und so durch die Düse gepresst, dass sie fein zerstäubt wird. Durch den Druck kann die Verarbeitbarkeit des Coatings beeinflusst werden, wobei gilt, dass je höher der Druck ist, desto homogener und breiter wird das Sprühbild. Beim Auftragen einer Beschichtung auf zum Beispiel mit faserartigen Füllmaterialien, wie Mineralwolle, verfüllte Fugen darf der Druck, mit dem die Zusammensetzung appliziert wird nicht zu hoch sein, da die Beschichtung sonst das Füllmaterial deformiert, oder zu tief in das Füllmaterial eindringt, wodurch die aufzutragenden Schichten dicker werden müssen oder es kann durch einen viel zu hohem Druck das Füllmaterial aus der Fuge herausgeblasen werden (Materialverlust). Hierbei hat sich ein oberer Grenzwert für den Druck an der Sprühpistole von maximal 100 - 120 bar als vorteilhaft erwiesen, um sowohl gute Sprühbarkeit als auch einen geringen Materialverlust bei optimaler Verarbeitbarkeit zu gewährleisten.

Als nachteilig hat sich jedoch bei den Formulierungen auf wässriger Basis oder Lösemittelbasis herausgestellt, dass die aufgetragenen Abdichtungen relativ lange Aushärtezeiten haben, da diese physikalisch durch Verdunsten des Wassers bzw. Lösemittels trocknen (härten). Nachteil insbesondere von wasserbasierten Systemen ist dabei die Abhängigkeit von den klimatischen Bedingungen. So benötigen solche Systeme vor allem bei Temperaturen von 5 bis 15 °C und hoher Luftfeuchtigkeit ein Vielfaches der Trocknungszeiten.

Ferner ist nachteilig an diesen Verfahren, dass die aufgetragenen Abdichtungen unter gewissen Witterungsbedingungen, insbesondere bei regnerischem Wetter, beschädigt werden können. Die Abdichtungen werden meist zu einem Zeitpunkt aufgetragen, in dem die Gebäudehülle noch nicht ganz geschlossen ist. Dies hat zur Folge, dass beispielsweise Regen in das Gebäude eindringen kann, welcher den noch nicht vollständig ausgehärteten wasserbasierenden Dichtstoff der Abdichtung auswaschen oder wegspülen kann.

Ein weiterer Nachteil aktuell bestehender Lösungen ist, dass sowohl wasserbasierte als auch niedrigviskose Silicon / Silicon-Urethan Zusammensetzungen von den Dämmstoffen, mit denen insbesondere größere Fugen gefüllt werden, aufgesogen werden oder diese soweit benetzt werden, dass die Abdichtung von dem Dämmstoff aufgenommen wird oder in diese eindringen, wodurch mit nur einem Beschichtungsvorgang keine glatte, geschlossene Oberfläche erreicht werden kann.

Unter Ausschluss von Wasser lagerfähige, bei Zutritt von Wasser bei Raumtemperatur zu Elastomeren vulkanisierende Einkomponenten-Dichtstoffe sind als sogenannte "Silicon-Dichtstoffe" bekannt. Diese Produkte werden in großen Mengen unter anderem in der Bauindustrie eingesetzt. Die Basis dieser Mischungen sind Polymere, insbesondere Siloxane, genauer Organopolysiloxane (häufig auch als Poly(organo)siloxane bezeichnet), die durch Silylgruppen terminiert sind, die reaktive Substituenten wie hydrolysierbare Gruppen tragen. Diese Dichtstoffe zeichnen sich dadurch aus, dass sie auf einer Vielzahl von Substraten ein ausgezeichnetes Haftverhalten aufweisen. Sie werden in der Regel als pastöse Massen angeboten und angewandt. Nachteilig ist bei diesen Dichtstoffen jedoch, dass sie zu hochviskos sind um mit baustellenüblichen Airless Sprühgeräten verarbeitet werden zu können und sich nicht durch Sprühen aufbringen lassen. Bei entsprechend niedrigviskos eingestellten Siliconbasierten Dichtstoffen ergibt sich wiederum das Problem der mangelnden Standfestigkeit und dass diese Dichtstoffe von dem Dämmmaterial aufgenommen werden. Die bekannten Siliconbasierten Dichtstoffe, erfüllen also ebenso wie die wasserbasierten Formulierungen nicht alle eingangs genannten Anforderungen an eine Abdichtung für Öffnungen, Spalten oder Fugen in Bauteilen. Systeme die zur Viskositätserniedrigung eine Zugabe von Lösemitteln verwenden weisen den Nachteil auf, dass sie ein schlechtes Nass - zu Trockenschichtstärkenverhältnis aufweisen. Darüber hinaus kann die Verwendung von Lösemitteln zu einer Verlängerung der Aushärtungszeit führen.

Es sind kommerzielle Dichtstoffe auf Basis unterschiedlicher Zusammensetzungen bekannt. Specified Technologies Inc. (STI) beispielsweise vertreibt ein Produkt auf Basis einer Silicon/Urethan-Hybridzusammensetzung, welches etwa 13% Lösungsmittel enthält (SpecSeal® Fast Tack®). Diese Produkt hat jedoch den Nachteil, dass es nur bedingt sprühbar ist, eine verglichen mit rein reaktiven Systemen lange Trocknungszeit aufweist und dementsprechend nach dem Auftragen nicht witterungsbeständig ist. Insbesondere leidet die Aushärtung der Zusammensetzung bei niedriger Temperatur, die extrem verlängert wird. Darüber hinaus weist eine aufgetragene Beschichtung eine mäßige Standfestigkeit auf. Auch weist dieses System einen Verlust der Nassschichtstärke zur Trockenschichtstärke auf, da die 13% Lösemittel bei der Trocknung / Aushärtung aus dem System verloren gehen.

Von der Quest Construction Products, LLC, eine Tochtergesellschaft der Quest Specialty Chemicals, Inc. sind zwei Produkte für Beschichtungen auf Silikonbasis bekannt, ein extrem hochgefülltes System mit 96% Feststoffanteil (Unisil High Solid (Unisil HS)) und ein hochgefülltes Lösemittel-haltiges System mit 80% Feststoffanteil (Unisil). Das Unisil HS ist nur unter ganz speziellen Bedingungen sprühbar, was eine universelle Anwendung mit unterschiedlichen Sprühgeräten unmöglich macht. Das Unisil ist zwar bei höheren Drücken sprühbar, hat aber nur eine mäßige Standfestigkeit und härtet aufgrund des Lösemittelanteils nur langsam aus.

Darüber hinaus sind wasserbasierte Acrylatdispersionen bekannt, die Additive zur schnelleren Hautbildung enthalten. Diese Zusammensetzungen haben jedoch den Nachteil, dass sie nur eine mäßige Regenbeständigkeit aufweisen und stark von klimatischen Bedingungen, wie Luftfeuchte, Temperatur und Luftbewegung abhängen.

Es besteht also weiterhin Bedarf an einer Silicon-Zusammensetzung, die frei oder weitestgehend frei von Wasser und Lösungsmitteln ist, auch bei niedrigen Temperaturen sprühbar aber trotzdem insbesondere bei Schichtdicken über 3mm standfest ist, und die eine schnelle Hautbildung und Aushärtung aufweist. Insbesondere soll sie auf einer Vielzahl von unterschiedlichen Substraten, wie sie im Baubereich vorkommen, gute Haftung aufweisen und einen möglichst geringen Unterschied der Nass- zur Trockenschichtdicke aufweisen.

Aufgabe der vorliegenden Erfindung ist es daher, eine Zusammensetzung auf der Basis von Organopolysiloxanen bereitzustellen, die zu Elastomeren mit hoher Elastizität aushärten, die sprühbar und nach dem Auftragen standfest sind und die ein gutes Haftungsspektrum aufweisen. Ferner ist eine anwenderfreundliche Härtungszeit bei der Anwendung erwünscht, welche auch bei erhöhter Luftfeuchtigkeit und niedrigen Temperaturen nicht beeinträchtigt ist. Darüber hinaus soll die Lösung möglichst keinen Volumenverlust durch Abgabe von Lösemitteln aufweisen.

Der Gegenstand der vorliegenden Erfindung ist den Patentansprüchen zu entnehmen, er besteht in der Bereitstellung einer sprühbaren, standfesten Zusammensetzung enthaltend
- mindestens ein Hydroxylgruppen und/oder hydrolysierbare Gruppen enthaltendes Organopolysiloxan,
- mindestens ein Vernetzungsmittel auf Basis eines funktionalisierten Silans,
- mindestens einen Füllstoff auf Siliciumdioxid-Basis,
- mindestens einen Kondensationskatalysator.

Bevorzugt weist die Zusammensetzung eine dynamische Viskosität von höchstens 10.000 mPa·s, bevorzugt 3.000 bis 8.000 mPa·s (Brookfield DV-I+; Spindel 6; 25°C; 100 UpM) auf.

Ein weiterer Gegenstand der vorliegenden Erfindung ist die Verwendung einer Zusammensetzung der oben genannten Art als härtbarer Dichtstoff oder Beschichtungsmittel mit verbesserten Eigenschaften.

Ein Gegenstand der vorliegenden Erfindung ist ferner ein Verfahren zum Abdichten von Öffnung oder Spalten in Bauteilen.

Bei den hierin genannten Viskositäten handelt es sich um dynamische Viskositäten, die üblicherweise mit Rotationsviskosimetern gemessen werden. Sofern nichts anderes angegeben ist, wurden die dynamischen Viskositäten mit einem Brookfield DV-I+ oder einem Brookfield DV-II+ Viskosimeter, jeweils bei 25°C und 100 UpM (Umdrehungen pro Minute) gemessen. Sofern es auf die verwendete Spindel ankommt, ist diese entsprechend angegeben, im Übrigen kann die Wahl der Spindel durch den Fachmann erfolgen.

Der Film ist elastomer und ist in der Lage sich Kontraktions- (-) und Expansions-Bewegungen (+) von wenigstens ± 3%, vorzugsweise von wenigstens ± 10% und besonders bevorzugt von wenigstens ± 15%, in jedem der Fälle relativ zur nominalen Verbindungsbreite, gemessen durch das ASTM-Testverfahren E 13099-91 "Standardtestverfahren für die cyclische Bewegung und Messung der minimalen und maximalen Verbindungsbreiten von architektonischen Verbindungssystemen", anzupassen. Der hierin verwendete Begriff "nominale Verbindungsbreite" meint die Breite der Verbindung im Ruhe-/ Ausgangszustand.

Die erfindungsgemäße Zusammensetzung zeichnet sich durch eine niedrige Viskosität im hohen Scherbereich aus, so dass sie sprühbar ist. *"Sprühbar"* im Sinne der Erfindung bedeutet, dass die Zusammensetzung mittels Airless Sprühgeräten bei einem Pumpenausgangsdruck von maximal 220bar und einem Durchflussvolumen von maximal 5 L/min, bevorzugt 2 - 3 L/min, wie sie üblicherweise auf Baustellen Verwendung finden, ausgebracht werden kann. Dies wird ohne den Einsatz von Lösungsmitteln erreicht, welche sich nachträglich auf die Eigenschaften der aufgebrachten und/oder der gehärteten Zusammensetzung auswirkt. Ferner ist es möglich, hierdurch einen hohen Füllgrad an Feststoffen zu erreichen. Neben der Sprühbarkeit zeichnet sich die erfindungsgemäße Zusammensetzung dadurch aus, dass sie nach dem Auftragen bis zu einer Schichtdicke von mindestens 3 mm standfest ist und an vertikalen Flächen nicht herunterläuft. Dennoch kann die Zusammensetzung problemlos aus dem Vorratsgefäß angesaugt werden.

Ein weiterer Vorteil der erfindungsgemäßen Zusammensetzung ist die schnelle Aushärtung, vor allem bei hoher Luftfeuchtigkeit, so dass sich sehr schnell ein Film bildet, der zum einen die Standfestigkeit unterstützt und zum anderen den noch nicht ausreichend gehärteten Teil der Zusammensetzung gegen nachträgliche äußere Einflüsse, wie etwa hohe Feuchtigkeit oder direkten Regen, schützt.

Es gibt keine Einschränkung hinsichtlich der in der erfindungsgemäßen Zusammensetzung verwendeten Organopolysiloxane solange diese Hydroxylgruppen oder hydrolysierbare Gruppen als Endgruppen aufweisen, die ggf. nach der Hydrolyse mit Wasser durch eine Kondensationsreaktion eine Si-O-Si-Bindung bilden können. Bei der Zusammensetzung der vorliegenden Erfindung handelt es sich insbesondere um eine Einkomponenten-Zusammensetzung auf der Basis von Organopolysiloxanen mit reaktiven funktionellen Endgruppen, die bei Raumtemperatur vulkanisieren. Zur Vulkanisation ist Luftfeuchtigkeit erforderlich. Derartige Systeme werden gewöhnlich als RTV-1 Silicone bezeichnet (RTV = "room temperature vulcanizing"; 1 = einkomponentig).

Das Organopolysiloxan ist dabei feuchtigkeitshärtend und enthält vernetzungsfähige Gruppen, wie siliziumgebundene Hydroxy-, Alkoxy-, Alkenyloxy-, Aryloxy-, Acetoxy- oder Ketiminoxy- (hierin auch als Ketoxim- bezeichnet), Amino- oder Amidogruppen, die bei Anwesenheit von Wasser, insbesondere Luftfeuchtigkeit, unter Abspaltung der jeweiligen hydrolysierten Gruppe eine Si-OH-Gruppe bilden, die wiederum unter Bildung einer Si-O-Si-Bindung kondensieren (= härten bzw. vulkanisieren).

Das Hydroxylgruppen oder hydrolysierbare Gruppen enthaltende Organopolysiloxan ist vorzugsweise ein α,ω-funktionelles Organopolysiloxan, das pro Molekül mindestens zwei funktionelle Gruppen aufweist, die, gegebenenfalls nach Hydrolyse, kondensierbar sind.

Derartige Organopolysiloxane können durch die allgemeine Formel (I) dargestellt werden 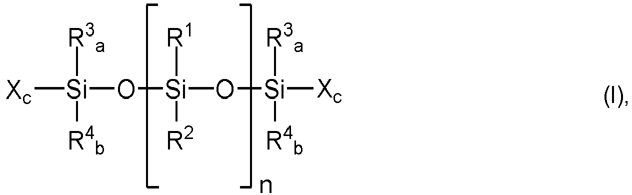 in der
**a** = 0 oder 1,
**b** = 0 oder 1,
mit a + b = 0, 1 oder 2,
**c**=3-(a+b),
**n** einen Wert besitzt, damit die Zusammensetzung bei einer Temperatur von 25°C eine dynamische Viskosität von höchstens 10.000 mPa·s (Brookfield DV-I+; Spindel 6; 100 UpM) hat;
die Reste **X** identisch oder verschieden sind und eine OH-Gruppe mit a + b = 2, einen Alkoxy- oder Alkenyloxyrest mit 1 bis 10 Kohlenstoffatomen, einen Aryloxyrest mit 6 bis 13 Kohlenstoffatomen, einen Acyloxyrest mit 1 bis 13 Kohlenstoffatomen, eine Ketoximgruppe mit 1 bis 8 Kohlenstoffatomen oder eine funktionelle Amino- oder Amidogruppe mit 1 bis 6 Kohlenstoffatomen, die an das Silicium durch eine Si-N-Bindung gebunden sind;
die Reste **R¹** und **R²** sind gleich oder verschieden und lineare oder verzweigte, einwertige Kohlenwasserstoffreste mit 1 bis 12 Kohlenstoffatomen, welche gegebenenfalls ein oder mehrere Heteroatome und gegebenenfalls eine oder mehrere C-C-Doppelbindungen und/oder gegebenenfalls cycloaliphatische und/oder aromatische Anteile bzw. Reste aufweisen;
die Reste **R³** und **R⁴** sind gleich oder verschieden und bedeuten organische aliphatische Alkyl-, Aminoalkyl-, Polyaminoalkyl-, Epoxyalkyl-, Alkenylreste mit 1 bis 13 Kohlenstoffatomen, aromatische Arylreste mit 6 bis 13 Kohlenstoffatomen; wobei mindestens 2 und bevorzugt mindestens 3 gegebenenfalls nach Hydrolyse kondensierbare funktionelle Gruppen pro Molekül vorhanden sind.

Als Beispiel für den Rest X können die folgenden Gruppen genannt werden: Alkoxy, wie beispielsweise Methoxy, Ethoxy oder Octyloxy, Alkenyloxyl, wie beispielsweise Vinyloxy, Hexenyloxy oder Isopropenyloxy, Aryloxy, wie beispielsweise Phenyloxy, Acyloxy, wie beispielsweise Acetoxy, Ketoxim, wie beispielsweise ON=C(CH₃)C₂H₅; Aminoderivate, wie beispielsweise Ethylamino oder Phenylamino, Amidoderivate, wie beispielsweise Methylacetamido.

Als organische aliphatische oder aromatische Reste können genannt werden für R¹, R²: beispielsweise die Gruppen Methyl, Ethyl, Octyl, Trifluorpropyl, Vinyl, Phenyl; für R³, R⁴: beispielsweise die Gruppen Methyl, Ethyl, Octyl, Vinyl, Allyl, Phenyl; -(CH₂)₃-NH₂; -(CH₂)₃-NH-(CH₂)₂-NH₂.

Die Reste R¹ und R² stehen bevorzugt für Alkylreste mit 1 bis 5, insbesondere 1 bis 3 Kohlenstoffatomen, bevorzugt für Methylgruppen.

Die Viskosität des verwendeten Hydroxylgruppen und/oder hydrolysierbare Gruppen enthaltenden Organopolysiloxans hängt dabei von den verwendeten Füllstoffen, einschließlich der verstärkenden Füllstoffe und ggf. weiteren flüssigen Komponenten ab und wird in Abhängigkeit davon so gewählt, dass die Zusammensetzung eine dynamische Viskosität von höchstens 10.000 mPa·²²s, bevorzugt 3.000 bis 8.000 mPa·s (Brookfield DV-I+; Spindel 6; 25°C; 100 UpM) aufweist.

Das Organopolysiloxan der Formel (I) hat bevorzugt eine dynamische Viskosität von höchstens 10.000, bevorzugt höchstens 7.000 mPa·s, weiter bevorzugt höchstens 5.000 mPa·s (Brookfield DV-II+; 25°C; 100 UpM). Besonders bevorzugt hat das Organopolysiloxan bei 25°C eine dynamische Viskosität im Bereich von 500 bis 3.000 mPa·s und weiter bevorzugt 750 bis 2.500 mPa·s (Brookfield DV-II+; 25°C; 100 UpM).

Obwohl die Organopolysiloxane so definiert sind, als wären sie ein einzelner Materialtyp, ist es möglich oder in gewissen Fällen sogar erwünscht, Mischungen von verschiedenen Organopolysiloxanen einzusetzen, um die erforderliche Viskosität einzustellen. Es wurde gefunden, dass Mischungen, die diese erwünschte Viskosität aufweisen, dadurch hergestellt werden können, in dem man als Organopolysiloxan eine Mischung aus einem Organopolysiloxan mit hoher Viskosität und einem Organopolysiloxan mit niedriger Viskosität verwendet. Die Mengen der zwei Organopolysiloxane werden so ausgewählt, dass die Mischungsviskosität im gewünschten Bereich liegt. Die Mischungsviskosität der Mischung von Organopolysiloxanen ist an sich bekannt und wird durch die folgende Formel log n_{B} = X₁ log n₁ + X₂ log n₂ definiert. In der Formel bedeuten: log n_{B} der Logarithmus der Viskosität der Mischung; X₁ der Anteil des ersten Organopolysiloxans in der Mischung und log n₁ der Logarithmus der Viskosität der ersten Organopolysiloxans in der Mischung; X₂ der Anteil des zweiten Organopolysiloxans in der Mischung und log n₂ ist der Logarithmus der Viskosität des zweiten Organopolysiloxans in der Mischung. Entsprechend dieser Formel werden zwei Organopolysiloxane in der Weise ausgewählt, dass sich die gewünschte Viskosität in der Mischung einstellt. Für viele erfindungsgemäße Zwecke ist das bevorzugte Organopolysiloxan jedoch ein einzelnes Organopolysiloxan.

Der Anteil des Organopolysiloxans hängt insbesondere davon ab, was für Füllstoffe enthalten sind und in welchen Mengen diese enthalten sind. Erfindungsgemäß kann die Zusammensetzung neben den Füllstoffen auf Siliciumdioxid-Basis andere weitere Füllstoffe in der erfindungsgemäßen Zusammensetzung enthalten. Dies wirkt sich auch auf den Anteil aus, in dem das Organopolysiloxan enthalten sein kann. Der Fachmann kann die geeignete Menge einfach bestimmen.

Bei System mit einem niedrigen Feststoffgehalt, d.h. ohne andere weitere Füllstoffe neben den Füllstoffen auf Siliciumdioxid-Basis, beträgt der Anteil des Organopolysiloxans vorzugsweise 25 bis 80 Gew.-%, bevorzugt 50 bis 65 Gew.-%, bezogen auf die gesamte Zusammensetzung. Bei gefüllten Systemen, d.h. bei erfindungsgemäßen Zusammensetzungen, die andere weitere Füllstoffe enthalten, beträgt der Anteil des Organopolysiloxans , 25 bis 50 Gew.-%, bevorzugt 30 bis 40 Gew.-% und besonders bevorzugt 30 bis 35 Gew.-%, bezogen auf die gesamte Zusammensetzung.

Die Zusammensetzung umfasst ferner einen oder mehrere Vernetzungsmittel.

Es gibt im Wesentlichen keine Beschränkung hinsichtlich des Vernetzungsmittels, die in der erfindungsgemäßen Zusammensetzung verwendet werden können, außer, dass sie in der Lage sind, funktionalisierte Endgruppen aufweisende Organopolysiloxane unter Erzeugung gehärteter Zusammensetzungen zu vernetzen. Als Vernetzungsmittel können die üblicherweise für Organopolysiloxane verwendeten und dem Fachmann bekannten Verbindungen verwendet werden.

Das Vernetzungsmittel ist z.B. bevorzugt ausgewählt aus einem Tetraalkoxysilan, Organotrialkoxysilan, Diorganodialkoxysilan und/oder Oligo(organoalkoxysilan), Tetrakisketoximsilan, Organotrisketoximsilan, Diorganobisketoximsilan und/oder Oligo(organoketoximsilan), die gegebenenfalls mit einem oder mehreren Heteroatomen im Organyl-Rest funktionalisiert sind, oder Mischungen davon.

Das Vernetzungsmittel ist bevorzugt ein Silan der Formel (II).

(R')q-Si-(R")_{4-q} (II).

Der Rest R' steht unabhängig voneinander für einen Rest, wie er vorhergehend für R³ und R⁴ im Organopolysiloxan der Formel (I) definiert worden ist. Selbstverständlich ist R' dabei unabhängig von der Bedeutung von R³ bzw. R⁴ im Organopolysiloxan. Der Rest R" steht unabhängig voneinander für einen Rest, wie er vorhergehend für X im Organopolysiloxan der Formel (I) definiert worden ist. Selbstverständlich ist R" dabei unabhängig von der Bedeutung von X im Organopolysiloxan. Vorzugsweise stehen die Reste R" für Alkoxy- oder Ketoximgruppen, wie sie vorhergehend beschrieben worden sind.

Weiterhin steht der Index q für einen Wert von 0 bis 4, mit der Maßgabe, dass falls q für einen Wert von 3 oder 4 steht, mindestens q-2 Reste R' jeweils mindestens eine mit den Hydroxyl-, Alkoxy-, Acetoxy-, Amino- oder Ketoximgruppen des Organopolysiloxans reaktive Gruppe aufweisen. Insbesondere steht q für einen Wert von 0, 1 oder 2, bevorzugt für einen Wert von 0 oder 1. Bevorzugt steht der Rest R" für eine Ketoximgruppe -O-N=CYZ, wobei Y und Z unabhängig voneinander geradkettige oder verzweigte Kohlenwasserstoffreste, die gegebenenfalls mit Halogenen substituiert sind, oder Y und Z zusammen mit dem Kohlenstoffatom an das diese angebunden sind einen Kohlenwasserstoffring bilden; bevorzugt stellen Y und Z, die gleich oder unterschiedlich sein können, C₁-C₈-Alkyl- oder Haloalkylreste, besonders bevorzugt C₁-C₈-Alkylreste dar.

Beispiele geeigneter Silane der Formel (II) sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetran-propoxysilan, Tetra-n-butoxysilan, Methyltris(methylethylketoxim)silan, Phenyltris(methylethylketoxim)silan, Vinyltris(methylethylketoxim)silan, Methyltris(methylisobutylketoxim)silan, Methyltris(methylpropylketoxim)silan oder Tetra(methylethylketoxim)silan. Besonders bevorzugt sind Methyltrimethoxysilan, Vinyltrimethoxysilan, Tetraethoxysilan, Methyltris(methylethylketoxim)silan, Vinyltris(methylethylketoxim)silan, Methyltris(methylisobutylketoxim)silan und Methyltris(methylpropylketoxim)silan.

Weiterhin können die Silane der Formel (II) auch bereits teilweise (ein Teil aller R" = OH) oder vollständig hydrolysiert (alle R" = OH) vorliegen. Aufgrund der stark erhöhten Reaktivität von teilweise oder vollständig hydrolysierten Silanen kann ihr Einsatz als Vernetzungsmittel vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren, kommen kann, welche durch Kondensation von hydrolysierten Silanen gebildet werden.

Besonders bevorzugte oligomere Siloxane sind beispielsweise Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan, Decaethoxytetrasiloxan.

Selbstverständlich können als Vernetzungsmittel für die Organopolysiloxane auch beliebige Mischungen der vorhergehend genannten Silane eingesetzt werden.

Der Anteil des Vernetzungsmittel beträgt vorzugsweise bis 10 Gew.-%, weiter bevorzugt 2 bis 8 Gew.-%, besonders bevorzugt 3 bis 7 Gew.-%, bezogen auf die gesamte Zusammensetzung.

Die Zusammensetzung umfasst ferner einen Füllstoff auf Siliciumdioxid-Basis, der bevorzugt verstärkend wirkt, das heißt, dass dieser auch vernetzt. Beispiele hierfür sind Kieselerde, kolloidale Kieselsäure, pyrogene Kieselsäure und Fällungskieselsäure. Als Kieselsäure sind hydrophobe Kieselsäuren, d.h. oberflächenbehandelte Kieselsäuren, insbesondere eine hydrophobe, pyrogene Kieselsäure bevorzugt, insbesondere hochdisperse Kieselsäuren aus Pyrolyseprozessen. Typischerweise weisen geeignete hydrophobe Kieselsäuren eine BET-Oberfläche im Bereich von 100 bis 300 m²/g auf. Die BET- Oberfläche wird beispielsweise bestimmt nach EN ISO 18757.

Geeignete hydrophobe Kieselsäuren lassen sich beispielsweise durch Hydrophobierung von hydrophilen Kieselsäuren mit Organosilanen oder Organosiloxanen, z.B. Octamethylcyclotetrasiloxan, Polydimethylsiloxan, Dimethyldichlorsilan oder Hexamethyldisilazan, herstellen.

Eine geeignete Menge an Füllstoff auf Siliciumdioxid-Basis, wobei auch Mischungen umfasst sind, liegt bevorzugt im Bereich von 1 bis 20 Gew.-%, weiter bevorzugt 1 bis 10 Gew.-%, besonders bevorzugt 1 bis 7 Gew.-%, bezogen auf die gesamte Zusammensetzung.

In einer Ausführungsform kann die Zusammensetzung ferner einen weiteren Füllstoff umfassen, welcher silikatfrei ist und damit im Wesentlichen nicht verstärkend wirkt. Beispiele für geeignete Füllstoffe sind anorganische und organische Füllstoffe, zum Beispiel Carbonate, pyrogene und/oder gefällte Metall- und/oder Halbmetalloxide oder -hydroxide oder Mischoxide davon, ausgenommen Siliciumverbindungen, Sulfate, Carbide, Nitride, Silicate, Glas, Kohlenstoffmodifikationen, natürliche nicht silikatische Minerale oder Russsorten. Die silikatfreien Füllstoffe können gegebenenfalls oberflächenbehandelt ("gecoatet") sein. Konkrete Beispiele sind natürliche, gemahlene oder gefällte Calciumcarbonate, z.B. Kreiden, welche gegebenenfalls mit Fettsäuren, insbesondere Stearinsäure, beschichtet sind. Die mittlere Teilchengröße der Füllstoffe soll im Bereich zwischen 0,01 bis 30 µm liegen.

Der Füllstoff wird je nach gewünschter Eigenschaft der Zusammensetzung ausgewählt. Wird eine hochvernetzte Zusammensetzung mit hoher Reißfestigkeit gewünscht, so wird ein verstärkender Füllstoff, insbesondere Kieselgel, gegebenenfalls zusammen mit einem nicht verstärkenden Füllstoff, wie beispielsweise Calciumcarbonat, verwendet. Über die Oberflächenbeschaffenheit der Füllstoffe können drüber hinaus andere Eigenschaften sowie die verwendbaren Mengen der Füllstoffe eingestellt werden.

Um jedoch eine möglichst hydrophobe Zusammensetzung bereitzustellen, die nicht von einem Trägermaterial, das meist hydrophil ist, aufgesogen wird, oder diese penetriert, so dass die Oberfläche der Beschichtung gleichmäßig eben bleibt, sind hydrophobierte Füllstoffe, insbesondere hydrophobierte silikatfreie Füllstoffe und/oder Füllstoffe auf Siliciumdioxid-Basis besonders bevorzugt.

Eine geeignete Menge an silikatfreiem Füllstoff, wobei auch Mischungen umfasst sind, liegt bevorzugt im Bereich bis zu 60 Gew.-%, weiter bevorzugt 20 bis 50 Gew.-%, besonders bevorzugt 30 bis 40 Gew.-%, bezogen auf die gesamte Zusammensetzung.

In einer bevorzugten Ausführungsform enthält die erfindungsgemäße Zusammensetzung zusätzlich mindestens einen Kondensationskatalysator. Dieser dient als Katalysator für die Vernetzung der Organopolysiloxane. Damit kann die Aushärtung der Zusammensetzung beschleunigt werden. Dies hat unter anderem den Effekt, dass die Zusammensetzung, wenn sie als Beschichtung zum Abdichten von Öffnungen oder Fugen verwendet wird, zu einem sehr frühen Zeitpunkt unempfindlich gegenüber schädlichen Witterungseinflüssen ist, wie etwa Schlagregen.

Es gibt auch im Wesentlichen keine Beschränkung hinsichtlich der in der erfindungsgemäßen Zusammensetzung verwendeten Kondensationskatalysatoren. Es können eine Vielzahl von in der Silanchemie üblichen Vernetzungskatalysatoren eingesetzt werden.

Bevorzugte Kondensationskatalysatoren sind Organylverbindungen und/oder Komplexe von Metallen oder Halbmetallen, insbesondere aus den Gruppen la, IIa, IIIa, IVa, IVb oder IIb des Periodensystems der Elemente, wie z.B. Sn-Verbindungen, Ti-Verbindungen, wie Titanate, und Borate, oder Mischungen davon.

Bevorzugte zinnorganische Verbindungen sind Dialkylzinnverbindungen, z.B. ausgewählt aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di- n-butylzinndimaleinat, Di-n-butylzinndioleat, Di-n-butylzinndiacetat, Di-n-octylzinndi-2-ethylhexanoat, Di-n-octylzinndi-2,2-dimethyloctanoat, Di-n-octylzinndimaleinat und Di- n-octylzinndilaurat. Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei diejenigen, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe. Bevorzugte Titanate sind beispielsweise Tetrabutyl- oder Tetraisopropyltitanat. Weiterhin geeignete Titanate weisen mindestens einen mehrzähnigen Liganden, auch Chelatligand genannt, auf. Insbesondere ist der mehrzähnige Ligand ein zweizähniger Ligand.

Selbstverständlich ist es möglich oder in gewissen Fällen sogar bevorzugt, Mischungen verschiedener Kondensationskatalysatoren einzusetzen.

Dem Fachmann ist bekannt, dass der Anteil des Kondensationskatalysators von den gewählten Organopolysiloxanen, insbesondere den funktionellen Silangruppen abhängt und er kann die Menge entsprechend bestimmen. Die Menge an Kondensationskatalysator beträgt vorzugsweise bis 6 Gew.-%, weiter bevorzugt bis 3 Gew.-% und besonders bevorzugt bis 1 Gew.-% bezogen auf die gesamte Zusammensetzung. Bei Verwendung von Zinnkatalysatoren beträgt die bevorzugte Menge bis zu 0,4 Gew.-%, bezogen auf die gesamte Zusammensetzung.

In einer weiteren Ausführungsform kann die erfindungsgemäße Zusammensetzung zusätzlich ein nicht funktionalisiertes Organopolysiloxan enthalten, das heißt ein Organopolysiloxan, das frei von Hydroxylgruppen und/oder von hydrolysierbaren Gruppen ist. Dadurch kann neben der für das Organopolysiloxan gewählten Viskosität die Viskosität der gesamten Formulierung auf einen bestimmten Wert eingestellt werden. Zudem erhöhen sich durch deren Verwendung die hydrophoben Eigenschaften der gesamten Zusammensetzung.

Hier können die bereits genannten Organopolysiloxane eingesetzt werden, sofern sie nicht funktionalisiert sind. Geeignete nicht funktionalisierte Organopolysiloxane sind beispielsweise Siliconöle der allgemeinen Formel (III) 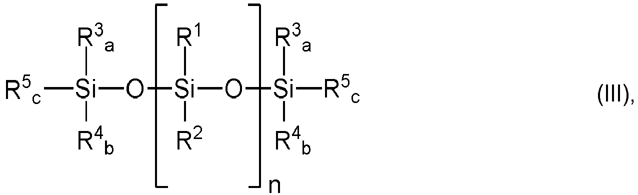 in der die Reste R¹ bis R⁴ die gleiche Bedeutung wie weiter oben zur Formel (I) ausgeführt, R⁵ kann dabei die gleiche Bedeutung haben wie R¹ bzw. R².

Das nicht funktionalisierte Organopolysiloxan hat vorzugsweise bei 25°C eine dynamische Viskosität bis 1.000 mPa·s, bevorzugt bis 200 mPa·s und besonders bevorzugt bis 10 mPa·s (Brookfield DV-II+; 25°C; 100 UpM).

Der Anteil des nicht funktionalisiertes Organopolysiloxans beträgt vorzugsweise bis 40 Gew.-%, weiter bevorzugt bis 30 Gew.-%, besonders bevorzugt 5 bis 25 Gew.-%, bezogen auf die gesamte Zusammensetzung.

In einer weiteren Ausführungsform kann die erfindungsgemäße Zusammensetzung zusätzlich einen Haftvermittler enthalten. Durch den Einsatz eines Haftvermittlers wird die Vernetzung des Bauteils mit der Zusammensetzung verbessert, so dass sich die Haftung im ausgehärteten Zustand erhöht.

Es gibt auch im Wesentlichen keine Beschränkung hinsichtlich der in der erfindungsgemäßen Zusammensetzung verwendeten Haftvermittler.

Beispielhaft können folgende Verbindungen, die als Vermittler verwendet werden können, erwähnt werden: N-2-Aminoethyl-3-aminopropyltriethoxysilan, γ-Aminopropyltriethoxysilan, γ-Aminopropyltrimethoxysilan, Aminopropyltrimethoxysilan, bis-γ-Trimethoxysilypropylamin, N-Phenyl-γ-aminopropyltrimethoxysilan, Triaminofunctionaltrimethoxysilan, γ-Aminopropylmethyldiethoxysilan, γ-Aminopropylmethyldiethoxysilan, Methacryloxypropyltrimethoxysilan, Methylaminopropyltrimethoxysilan, γ-Glycidoxypropylethyldimethoxysilan, γ-Glycidoxypropyltrimethoxysilan, β-Glycidoxyethyltrimethoxysilan, γ-(3,4-Epoxycyclohexyl)propyltrimethoxysilan, β-(3,4-Epoxycyclohexyl)ethylmethyldimethoxysilan, Isocyanatopropyltriethoxysilan, Isocyanatopropylmethyldimethoxysilan, β-Cyanoethyltrimethoxysilane, γ-Acryloxypropyltrimethoxysilan, γ-Methacryloxypropylmethyldimethoxysilan, 4-Amino-3,3-dimethylbutyltrimethoxysilan und N-ethyl-3-trimethoxysilyl-2-methylpropanamin.

Darüber hinaus können auch an niedrig viskose Polymere gekoppelte funktionalisierte Silane oder oligomere funktionalisierte Silane als Haftvermittler verwendet werden.

Der Anteil an Haftvermittler beträgt vorzugsweise bis 5 Gew.-%, weiter bevorzugt bis 3 Gew.-%, besonders bevorzugt 0,5 bis 2 Gew.-%, bezogen auf die gesamte Zusammensetzung.

Gegenüber den bisher bekannten Dichtstoffen, Klebstoffen oder Beschichtungsmitteln zeichnen sich die erfindungsgemäßen Zusammensetzungen durch folgende vorteilhafte Eigenschaften aus:
- wasser- und lösungsmittelfrei
- sprühbar, vor allem mittels Airless-Sprühgeräten (max. Pumpenausgangsdruck 220 bar; Durchfluss max. 5 L/min);
- nach dem Auftragen einer Schicht von mindestens 3 mm ist die Zusammensetzung standfest, das heißt, die Zusammensetzung rutscht an vertikalen Flächen nicht ab;
- schnelle Aushärtung (Hautbildung) und Durchhärtung, vor allem bei hoher Luftfeuchtigkeit (Hautbildungszeit bei Raumtemperatur < 30 - 40 min; Durchhärtung 2 mm Schicht < 24h);
- gute mechanische Eigenschaften (Reißdehnung > 200 %; Fugenbewegung ohne Riss ±12,5 %);
- schnelle Regenbeständigkeit (kein Anlösen oder Auswaschen durch Wasser, wie etwa Regen, vor Bildung der Haut) z.B. nach der ASTM D 6904-03 (2013);
- Verarbeitung, d.h. sprühbar, auch bei niedrigen Temperaturen < 5°C.

Die Anwendungsgebiete der erfindungsgemäßen Zusammensetzungen sind nicht beschränkt. Sie eigenen sich insbesondere als Dichtstoff und Beschichtungsmittel. Dementsprechend ist ein weiterer Gegenstand der Erfindung die Verwendung der oben beschriebenen Zusammensetzung als Dichtstoff oder Beschichtungsmittel. Insbesondere eignet sich die Zusammensetzung als Dichtstoff oder Beschichtungsmittel für bauliche Zwecke, wie die Abdichtung von Öffnungen, Fugen und Spalten, genauer Boden/Boden-Fugen, Wand/Wand-Fugen, Wand/Boden-Fugen. Ganz besonders eignet sich die erfindungsgemäße Zusammensetzung zur Abdichtung von Fugen bzw. Verbindungs- oder Anschlussfugen zwischen zwei Bauteilen (Boden/Boden, Boden/Wand, Wand/Wand), wie die Anschlussfuge von Vorhängefassaden. Die Zusammensetzung kann auch als Dichtmasse zur Abdichtung von Öffnungen durch Bauteile verwendet werden, durch die Leitungen jeglicher Art geführt werden, um den Ringspalt oder die Öffnung nach dem Durchführen der Leitungen wieder zu verschließen.

Ein weiterer Gegenstand der Erfindung ist demnach ein Verfahren zum Abdichten von Öffnungen in Bauteilen von Gebäuden, um die Feuer- und/oder Rauchgasweiterleitung zu verhindern, mit folgenden Schritten:
(a) Verfüllen der Öffnung oder des Spaltes mit einem Trägermaterial,
(b) Aufbringen einer Beschichtung aus einer oben beschriebenen Zusammensetzung, und
(c) Härten lassen der Beschichtung.

Der erste Schritt dieses Verfahrens ist es, die Öffnung mit einem Träger- oder Isolationsmaterial zu füllen, so dass eine gefüllte Öffnung resultiert. Die zu verwendende Menge an Trägermaterial hängt von der Größe der Öffnung ab und wird individuell bestimmt werden. Im Allgemeinen sollte die Öffnung mit einer ausreichenden Menge verfüllt werden, so dass die Lücke zwischen den Bauteilen vollständig geschlossen ist. Bei statischen Fugen, d.h. bei Fugen zwischen Bauteilen, die keiner Bewegung unterworfen sind, so dass die Fugenbreite im Wesentlichen konstant bleibt, ist es ausreichend, wenn die Fuge in ihrer Breite bündig mit dem Träger- oder Isoliermaterial gefüllt wird. Bündig bedeutet dabei, dass das soviel Träger- oder Isoliermaterial in die Fuge eingebracht wird, dass kein Spalt zwischen Träger- oder Isoliermaterial und dem jeweils angrenzenden Bauteil verbleibt. Nur so ist gewährleistet, dass im Brandfall die Beschichtung nicht beschädigt wird. Bei dynamischen Fugen, d.h. Fugen zwischen Bauteilen, die einer Bewegung unterworfen sind oder sein können, so dass sich die Fugenbreite verkleinern oder vergrößern kann, muss das Träger- oder Isoliermaterial in komprimierten Zustand in die Fuge eingebracht werden, damit es die Bewegung der Bauteile ausgleichen kann, so dass kein Spalt zwischen dem Träger- oder Isoliermaterial und dem jeweiligen Bauteil entstehen kann. Nur so ist gewährleistet, dass im Brandfall die Beschichtung nicht beschädigt wird. Bevorzugt wird das Material soweit komprimiert, dass es theoretisch das Doppelte der maximal möglichen Fugenbreite ausgleichen kann. Bevorzugt wird das Träger- oder Isoliermaterial um bis zu 30 - 40 %, besonders bevorzugt um bis zu 50% seiner ursprünglichen Breite komprimiert.

Bei dünnen Beschichtungen, bis etwa 3 mm ist es wichtig, dass das Träger- oder Isoliermaterial so in die Fuge eingebracht wird, dass dessen Oberfläche bündig mit der Oberfläche des daran horizontal angrenzenden Bauteils abschließt, so dass keine Stufe entsteht, da bei dynamischen Fugen die Beschichtung durch die Bewegung der Bauteile sonst beschädigt werden könnte. Bei dickeren Beschichtungen, ist es nicht so kritisch, wenn die Oberfläche des Träger- oder Isoliermaterials nicht bündig mit der Oberfläche des daran horizontal angrenzenden Bauteils abschließt. Dickere Beschichtungen tolerieren bei dynamischen Fugen eine kleine Stufe.

Es können die üblichen Materialien, die zum Verfüllen von Öffnungen und Fugen üblicherweise verwendet werden, als Trägermaterialien eingesetzt werden. Der Hauptzwecke des Trägermaterials besteht darin, die Größe einer Öffnung bzw. die Spaltbreite einer Fuge zu verringern, so dass die aufgebrachte Beschichtung die Öffnung bzw. Fuge überbrücken kann, ohne durchzughängen. Ein zweiter Zweck des Trägermaterials besteht darin, eine Isolierung bereitzustellen, etwa gegen Hitze, wie im Falle eines Brandes, aber auch gegen Schall.

Beispiele geeigneter Trägermaterialien umfassen Mineralwolle, Steinwolle, Glaswolle, Glasfasern, Fiberglas oder keramische Fasern, Verstärkungspappe oder Verstärkungsstäbe oder -schnüre oder Kombinationen davon. Vorzugsweise schränken die eingesetzten Trägermaterialien nicht die Beweglichkeit der Bauteile ein. Für Brandschutzzwecke wird vorzugsweise ein nicht brennbares Material als Trägermaterial verwendet. Als Trägermaterialien sind Mineralwolle und keramische Fasern bevorzugt.

Im nächsten Schritt wird eine Beschichtung aus der oben beschriebenen erfindungsgemäßen Zusammensetzung planparallel und mit den Bauteilen überlappend auf die Oberfläche des Füllstoffes aufgebracht, d.h. die Beschichtung bedeckt die gefüllte Öffnung und die Randbereiche eines jeden an die gefüllte Öffnung angrenzenden Bauteils. Die Längsausdehnung oder Überlappung der Beschichtung entlang der an die gefüllte Öffnung angrenzenden Bauteile ist nicht kritisch, außer dass es eine ausreichende Ausdehnung sein sollte, um ein Reißen oder Abtrennen des elastomeren Films, das sich nach dem Härten aufgrund der Bewegung, verursacht durch Ausdehnung oder Kontraktion der konstruktiven Komponenten oder jedes dadurch geführten Gegenstandes, ausbildet, zu verhindern. Im Allgemeinen wird das Aufbringen einer Beschichtung von 20 mm bis 40 mm entlang der an die Öffnung angrenzenden Bauteile ausreichend sein.

Die Beschichtung wird mittels Sprühen aufgebracht. Es ist besonders bevorzugt die Beschichtung durch Sprühen unter Verwendung einer druckluftlosen (airless) Apparatur aufzubringen. Die Apparatur hat dabei einen Pumpenausgangsdruck von maximal 220bar und ein Durchflussvolumen von maximal 5 L/min, bevorzugt 2 - 3 L/min. Um eine vollständige Abdeckung sicherzustellen, können eine oder mehrere Schichten der Zusammensetzung aufgetragen werden.

Die Dicke der Beschichtung, die aufgebracht werden sollte, wird so gewählt, dass die gehärtete Zusammensetzung eine Dicke von 0,25 bis 10 mm aufweist. Bevorzugt 1,0 bis 6,0 mm, besonders bevorzugt 1,5 - 3,0 mm.

Die erfindungsgemäße Zusammensetzung bildet nach dem Härten einen kontinuierlichen Film. Dies bedeutet der Film ist ohne Risse oder Hohlräume, die das Hindurchtreten von Rauch erlauben könnten. Zudem behält der Film diese kontinuierliche Beschaffenheit nach Bewegung der, an die Öffnung angrenzenden Bauteile bei.

In den nachfolgenden Ausführungsbeispielen soll die Erfindung näher erläutert werden, wobei die Auswahl der Beispiele keine Beschränkung des Umfangs des Erfindungsgegenstandes darstellen soll.

### AUSFÜHRUNGSBEISPIELE

### Beispiel 1

Für die Herstellung der erfindungsgemäßen Zusammensetzung werden wie nachfolgend angegeben die Einzelkomponenten vermengt und homogenisiert.

| | |
|---|---|
| 30-40 Gew.-% | hydroxyfunktionelles Polymer (dynamische Viskosität: 750 mPas (Brookfield DV-II+; 25°C; 100 UpM)) |
| 20 Gew.% | Siliconöl (dynamische Viskosität: 10 mPas (Brookfield DV-II+; 25°C; 100 UpM)) |
| 30-40 % | silikatfreier Füllstoff |
| 2-3 Gew.-% | Füllstoff auf Siliciumdioxid-Basis |
| 3-5 Gew.-% | Vernetzer auf Ketoximsilan-Basis |
| 0,05 - 0,1 Gew.-% | Katalysator |

### Vergleichsbeispiel 1

Als Vergleich diente ein kommerzielles Produkt auf Basis einer Silicon/Urethan-Hybridzusammensetzung (SpecSeal® Fast Tack® Firestop Spray; Specified Technologies Inc.).

### Vergleichsbeispiel 2

Als weiterer Vergleich diente ein weiteres kommerzielles Produkt auf Basis einer hoch gefüllten (Feststoffanteil 80%) Silikonzusammensetzung (Unisil; Quest Construction Products, LLC.).

Es wurde jeweils untersucht, ob sich die Zusammensetzungen mit einem handelsüblichen kleinen Airlessgerät (SprayTECH® EPX2355) ausbringen lassen und das entsprechende Sprühbild ermittelt. Ferner wurde das Aushärteverhalten anhand der Hautbildungszeit und teilweise der Tack Free Time, der Aushärtung einer 3 mm dicken Probe und der Beständigkeit gegen Schlagregen untersucht. Auch wurde die Standfestigkeit der Zusammensetzungen mit Hilfe des Rakeltest beurteilt.

### Beurteilung der Sprühbarkeit

Die Sprühbarkeit wurde mit einem Gerät aus der Reihe EXP2355 der SprayTECH Inc. mit einer Düse 417 beurteilt. Das Sprühbild wurde beurteilt und die Sprühbreite ermittelt, wobei die Sprühbreite dadurch ermittelt wurde, dass die Zusammensetzungen mit einer Düse 417 (Sprühwinkel 40°) aus einem Abstand von 30 cm bei einem voreingestellten Ausgangsdruck von 120 bar bei einer Temperatur von 5°C auf eine vertikale Fläche gesprüht wurde, dabei ist eine Sprühbreite von 20 cm oder mehr ideal. Als sprühbar wurde eine Zusammensetzung beurteilt, die einen perfekten Sprühnebel ergab, einen homogenen Materialfilm ergab, ohne dass Materialanhäufungen und Leitstrahlen beim Sprühen sichtbar waren.

### Bestimmung der Hautbildungszeit und der Tack Free Time

Zur Bestimmung der Hautbildungszeit wurde eine Keilform mit 30 cm Länge, 1 cm Breite und einer Dicke zwischen 100 mm an dem einen Ende und 0 mm an dem anderen Ende mit den jeweiligen Mischungen gefüllt. Es wurde der Zeitpunkt bestimmt ab wann eine zusammenhängende Schicht abgezogen werden kann.

Das Aushärteverhalten wurde auch anhand der Zeit beurteilt, bis die Formulierung keine klebrige Oberfläche (tack free time) mehr aufwies. Diese Zeit (tack free time) wurde gemäß ASTM C 679-013(2009) (Standard Test Method for Tack-Free Time of Elastomeric Sealants) bestimmt ((23±2°C; 50±5% relative Luftfeuchtigkeit (73,4±3,6°F; 50±5%relative humidity)).

### Beurteilung der Beständigkeitgegen Schlagregen

Die Beständigkeit gegen Schlagregen wurde gemäß ASTM D 6904-03(2013) (Standard Practice for Wind Driven Rain for Exterior Coatings Applied on Masonry) mit den folgenden Abweichungen bestimmt: Zur Bestimmung wurde ein 10,16 cm (4 Inch) breiter Spalt zwischen zwei Betonsubstraten mit Mineralwolle ausgefüllt und eine Schicht aus einer erfindungsgemäßen Zusammensetzung aufgetragen, wobei die Schicht folgende Maße aufwies: 406,4 mm x 203,2 mm x 2 mm (l x b x h) (16 Inch x 8 Inch x 0,08 Inch). Die Beschichtung wurde unter Standardbedingungen ((23±2°C; 50±5% relative Feuchtigkeit (73,4±3,6°F; 50±5% relative humidity)) über 160 min getrocknet. Die Beaufschlagung mit Wasser erfolgte unter den folgenden Bedingungen: 2 Stunden bei einem Druck von 1,2 [inH₂0] (Inch of water column; etwa 2,99 [mBar]), Wassermenge: 227,12 - 264,98 L/h (60-70gal/h); Sichtkontrolle (Sichtprüfung).

### Bestimmung der Regenbeständigkeit

Zur Bestimmung der Beständigkeit gegen Regen wurde in regelmäßigen Zeitabständen ein Wasserstrahl über einen handelsüblichen Duschkopf aus 1 m Höhe auf eine Beschichtung aus der jeweiligen Zusammensetzung gerichtet und durch Sichtprüfung der Zeitpunkt bestimmt, ab dem keine Beschädigungen der gebildeten Haut mehr auftraten.

### Bestimmung der Aushärtung

Zur Bestimmung des Aushärteverhaltens wurde jeweils eine Keilform mit 30 cm Länge, 1 cm Breite und einer Dicke zwischen 100 mm an dem einen Ende und 0 mm an dem anderen Ende mit den jeweiligen Mischungen gefüllt. In regelmäßigen Zeitabständen wurde überprüft, wie weit sich die Proben der Keilform entnehmen lassen. Der Zeitpunkt wurde bestimmt, zu dem die Proben bei einer Dicke von 3 mm der Teflonform entnommen werden konnten.

### Bestimmung der Standfestigkeit (ASTM D 3730. D4400)

Die Messung erfolgt nach folgender Versuchsvorschrift: mit einer BYK Gardner Testkarte (Chart AG 5310/2814) werden die zu untersuchenden Proben mit einer Ablaufrakel (BYK) in Bahnen unterschiedlicher Dicke (2, 3, 4, 5, 6, 8 und 2 mm) und jeweils 10 mm Breite mit jeweils 5 mm Abstand aufgetragen. Die Probe wird dabei in den schwarzen Bereich der Testkarte aufgebracht. Die Ablaufrakel wird mit den Aussparungen nach unten auf die Testkarte angelegt. Die gebogenen Enden der Ablaufrakeln zeigen in die linke Richtung. Die Ablaufrakel wird von dem schwarzen zum weißen Bereich - parallel zur Ober- und Unterkante der Testkarte - gezogen. Die Testkarte wird anschließend in eine vertikale Position gebracht, so dass die Linien in horizontaler Richtung weisen. Die Zeitmessung (10 min) wird gestartet.

Die Ergebnisse der jeweiligen Bestimmungen sind in den Tabellen 1 und 2 wiedergegeben. Hieraus wird ersichtlich, dass die erfindungsgemäße Zusammensetzung, verglichen mit den kommerziell erhältlichen Zusammensetzungen - auch bei niedrigen Temperaturen - sehr gut sprühbar ist und nach dem Applizieren eine hohe Standfestigkeit aufweist. Sie bildet sehr schnell eine sehr stabile Haut, was die erfindungsgemäße Zusammensetzung deutlich früher beständig gegen Regen und Schlagregen macht als die kommerziell erhältlichen Zusammensetzungen, und härtet auch schnell aus, auch bei niedrigen Temperaturen.

**Tabelle 1: Ergebnisse der Sprühbarkeitstests**

| **Beispiele** | **Vergleich 1** | **Vergleich 2** | **1** |
|---|---|---|---|
| Airlessgerät Düse 417 [cm] (5°C)¹⁾ | sprühbar; 7-12²⁾ (max. 110bar³⁾) | sprühbar; 7²⁾ (max. 105bar³⁾) | sprühbar; 7-11²⁾ (max. 105bar³⁾) |

| | | | |
|---|---|---|---|
| ¹⁾ Gerät: EPX 2355 der SprayTECH ²⁾ Sprühbreite ³⁾ Pumpenausgangsdruck | | | |

**Tabelle 2: Ergebnisse der Bestimmung der Regenbeständigkeit, der Aushärtezeit, der Hautbildung und der Standfestigkeit**

| **Beispiele** | **Vergleich 1** | **Vergleich 2** | **Beispiel** |
|---|---|---|---|
| Regenbeständigkeit [h] (23°C; 50% RH)⁴⁾ | >6 | n.b. | ab 1-2 |
| Regenbeständigkeit [h] (5°C; 80% RH)⁴⁾ | >23 | ab 6 | ab ∼2 |
| Aushärtezeit 3mm [h] (23°C; 50% RH)⁴⁾ | 16-17 | 33 | 11 |
| Aushärtezeit 3mm [h] (10°C; 80% RH)⁴⁾ | 55 | 33 | ∼20 |
| Aushärtezeit 3mm [h] (-5°C; 80% RH)⁴⁾ | keine | n.b. | 120 |
| Hautbildung 0,5mm [h] (23°C; 50% RH)⁴⁾ | >6 | n.b. | <1 |
| Hautbildung 0,5mm [h] (10°C; 80% RH)⁴⁾ | 6 | 3 | ∼2 |
| Tack Free Time [min] (23°C; 50% RH)⁴⁾ | 480 | n.b. | 55 |
| Standfestigkeit (maximale Dicke) [mm] | 2-3 | 2 | 4-5 |

| | | | |
|---|---|---|---|
| ⁴⁾ RH = rel. Luftfeuchtigkeit * n.b. = nicht bestimmt | | | |

## Patentansprüche

1. Sprühbare, standfeste Zusammensetzung, enthaltend
- mindestens ein Hydroxylgruppen und/oder hydrolysierbare Gruppen enthaltendes Organopolysiloxan,
- mindestens ein Vernetzungsmittel auf Basis eines funktionalisierten Silans,
- mindestens einen Füllstoff auf Siliciumdioxid-Basis und
- mindestens einen Kondensationskatalysator.

2. Zusammensetzung nach Anspruch 1, **dadurch gekennzeichnet, dass** die Zusammensetzung eine dynamische Viskosität von höchstens 10.000 mPa·s (Brookfield DV-I+; Spindel 6; 25°C; 100 UpM) aufweist.

3. Zusammensetzung nach Anspruch 1 oder 2, **dadurch gekennzeichnet, dass** das mindestens eine Hydroxylgruppen und/oder hydrolysierbare Gruppen enthaltende Organopolysiloxan eine dynamische Viskosität von höchstens 10.000 mPa·s (Brookfield DV-II+; 25°C; 100 UpM).

4. Zusammensetzung nach einem der vorhergehenden Ansprüche, **dadurch gekennzeichnet, dass** das Hydroxylgruppen und/oder hydrolysierbare Gruppen enthaltende Organopolysiloxan an beiden Kettenenden mit je einer Hydroxylgruppe funktionalisiert ist und keine weiteren Hydroxylgruppen und hydrolysierbare Gruppen enthält.

5. Zusammensetzung nach einem der vorhergehenden Ansprüche, **dadurch gekennzeichnet, dass** das Vernetzungsmittel auf Basis eines funktionalisierten Silans unter organofunktionellen Silanen ausgewählt ist.

6. Zusammensetzung nach Anspruch 5, **dadurch gekennzeichnet, dass** das Vernetzungsmittel eine Kombination aus zwei oder mehreren organofunktionellen Silanen unterschiedlicher Funktionalität ist.

7. Zusammensetzung nach einem der vorhergehenden Ansprüche, **dadurch gekennzeichnet, dass** der Füllstoff auf Siliciumdioxid-Basis aus der Gruppe ausgewählt ist, bestehend aus kolloidaler, pyrogener und gefällter Kieselsäure oder einer Kombination davon.

8. Zusammensetzung nach Anspruch 7, **dadurch gekennzeichnet, dass** der Füllstoff auf Siliciumdioxid-Basis oberflächenbehandelt ist.

9. Zusammensetzung nach einem der vorhergehenden Ansprüche, **dadurch gekennzeichnet, dass** die Zusammensetzung ferner einen silikatfreien Füllstoff enthält.

10. Zusammensetzung nach Anspruch 9, **dadurch gekennzeichnet, dass** der silikatfreie Füllstoff aus der Gruppe ausgewählt ist, bestehend aus Carbonaten, pyrogenen und/oder gefällten Metall- und/oder Halbmetalloxiden oder -hydroxiden oder Mischoxiden davon, ausgenommen Siliciumverbindungen, Sulfaten, Carbiden, Nitriden, Kohlenstoffmodifikationen, natürlichen nicht silikatischen Mineralen, oder Russsorten oder einer Kombination davon.

11. Zusammensetzung nach Anspruch 9 oder 10, **dadurch gekennzeichnet, dass** der silikatfreie Füllstoff oberflächenbehandelt ist.

12. Zusammensetzung nach einem der vorhergehenden Ansprüche, **dadurch gekennzeichnet, dass** die Zusammensetzung ferner mindestens ein Organopolysiloxan, das frei von Hydroxylgruppen und/oder hydrolysierbaren Gruppen ist, enthält.

13. Zusammensetzung nach Anspruch 12, **dadurch gekennzeichnet, dass** das Organopolysiloxan, das frei von Hydroxylgruppen und/oder von hydrolysierbaren Gruppen ist, eine dynamische Viskosität von 10 bis 500 mPa·s (gemessen nach Brookfield DV-II+; 25°C; 100 UpM) hat.

14. Zusammensetzung nach einem der vorhergehenden Ansprüche, **dadurch gekennzeichnet, dass** die Zusammensetzung ferner einen Haftvermittler enthält.

15. Zusammensetzung nach einem der vorhergehenden Ansprüche, **dadurch gekennzeichnet, dass** die Zusammensetzung bis zu maximal 8 Gew.-%, bezogen auf die gesamte Zusammensetzung, Wasser und/oder Lösungsmittel enthält.

16. Zusammensetzung nach einem der Ansprüche 1 bis 14, **dadurch gekennzeichnet, dass** die Zusammensetzung frei von Wasser und/oder Lösungsmitteln ist.

17. Verwendung einer Zusammensetzung nach einem der Ansprüche 1 bis 16 als Dichtstoff oder Beschichtungsmittel.

18. Verfahren zum Abdichten von Öffnungen oder Spalten in Bauteilen mit folgenden Schritten:
(d) Verfüllen der Öffnung oder des Spaltes mit einem Trägermaterial,
(e) Aufbringen einer Beschichtung aus einer Zusammensetzung nach einem der Ansprüche 1 bis 16, und
(f) Härten lassen der Beschichtung.

19. Verfahren nach Anspruch 18, **dadurch gekennzeichnet, dass** das Trägermaterial unter Mineralwolle, Steinwolle, Glaswolle, Glasfasern, Fiberglas oder Keramikfasern oder Kombinationen davon ausgewählt ist.
